## Europäisches Patentamt
## European Patent Office
## Office européen des brevets

(19)

(11) Veröffentlichungsnummer: **0 275 372**
**B1**

(12)

# EUROPÄISCHE PATENTSCHRIFT

(45) Veröffentlichungstag der Patentschrift:
03.01.90

(51) Int. Cl.⁴: **F01N 3/02**

(21) Anmeldenummer: **87115468.8**

(22) Anmeldetag: **22.10.87**

(54) **Russfilter für einen Dieselmotor.**

(30) Priorität: **17.01.87 DE 8700787 U**

(43) Veröffentlichungstag der Anmeldung:
**27.07.88 Patentblatt 88/30**

(45) Bekanntmachung des Hinweises auf die Patenterteilung:
**03.01.90 Patentblatt 90/1**

(84) Benannte Vertragsstaaten:
**DE ES FR GB IT NL SE**

(56) Entgegenhaltungen:
DE-A- 3 533 140
FR-A- 2 101 389
US-A- 4 224 285
US-A- 4 270 936
US-A- 4 276 066
US-A- 4 355 504
US-A- 4 456 457
US-A- 4 512 786
US-A- 4 549 398

PATENT ABSTRACTS OF JAPAN, Band 7,
Nr. 1 (M-183)[1146], 6. Januar 1983; &
JP-A-57 163 112 (TOYOTA JIDOSHA KOGYO
K.K.) 07-10-1982
PATENT ABSTRACTS OF JAPAN, Band 7,
Nr. 1 (M-183)[1146], 6. Januar 1983;

(73) Patentinhaber: **Kanthal GmbH, Aschaffenburger Strasse 7, D-6082 Mörfelden-Walldorf(DE)**

(72) Erfinder: **Gürtler, Johann Dipl.Ing., Siegweg 7, D-6074 Rödermark(DE)**
Erfinder: **Klöck, Hubert Dipl.-Ing., Genfer Strasse 6, D-6081 Stockstadt(DE)**
Erfinder: **Lorch, Jörg Dipl.-Ing., Wiener Strasse 9, D-6080 Gross-Gerau(DE)**

(74) Vertreter: **Gudel, Diether, Dr. et al, Patentanwälte Dr. V. Schmied-Kowarzik Dipl.-Ing. G. Dannenberg Dr. P. Weinhold Dr. D. Gudel Dipl.-Ing. S. Schubert Dr. P. Barz Grosse Eschenheimer Strasse 39, D-6000 Frankfurt am Main 1(DE)**

(56) Entgegenhaltungen: (Fortsetzung)
& 57 163 111 (TOYOTA JIDOSHA KOGYO K.K.) 07-10-1982

**Beschreibung**

Die Erfindung betrifft einen Rußfilter für die Abgase eines Dieselmotors mit einem Filterkörper, vor dem sich in der Strömungsrichtung der Abgase ein elektrisches Heizelement befindet, das in eingeschaltetem Zustand praktisch den gesamten von den Abgasen durchströmten Filterkörper auf eine Temperatur erwärmt, bei der die Rußteilchen verbrennen.

Einen derartigen Rußfilter beschreibt die US-A 4 270 936. Der Filterkörper ist dort als massiver Zylinder ausgebildet, vor dessen vordere Stirnfläche und zu dieser beabstandet sich das elektrische Heizelement befindet. Dieser Abstand wird dort offenbar gewählt, um zu erreichen, daß praktisch die gesamte vordere Stirnfläche des Filterkörpers mit Abgasen beaufschlagt wird, deren Rußteilchen vorher mit Hilfe des elektrischen Heizelements verbrannt worden sind.

Die Erfahrung hat aber gezeigt, daß sich der Filterkörper während des Betriebs praktisch über sein gesamtes Volumen mit den Rußpartikeln zusetzt. Das Rußfilter wird dann unbrauchbar, weil praktisch keine Abgase mehr durch ihn hindurchgehen oder zumindest nicht mehr eine ausreichende Menge an Abgasen pro Zeiteinheit durch ihn hindurchströmen kann, um den ungestörten Betrieb des Verbrennungsmotors (Dieselmotors) sicherzustellen. Zumindest die Rußteilchen, die sich in der Nähe des Ausgangsendes des Filterkörpers in diesem festgesetzt haben, werden von den Abgasen nicht mehr ausreichend erwärmt, um sicher verbrennen zu können. Man kann nämlich die Temperatur des Heizelements nicht beliebig erhöhen, weil dies zu einer schnellen Zerstörung des Heizelements, gegebenenfalls auch der direkt an das Heizelement angrenzenden Bereiche des Filterkörpers, führen würde. Auch steht in einem Kraftfahrzeug hierfür nicht ausreichend elektrische Energie zur Verfügung, wobei auch berücksichtigt werden muß, daß in der Regel das Rußfilter während des Betriebs des Dieselmotors dauernd gereinigt werden muß.

Der Erfindung liegt daher die Aufgabe zugrunde, ein Rußfilter mit den eingangs genannten Merkmalen vorzuschlagen, das sich durch einen fühlbar erhöhten Wirkungsgrad auszeichnet.

Zur Lösung dieser Aufgabe ist die Erfindung dadurch gekennzeichnet, daß der Filterkörper als wenigstens ein an einer Stirnseite geschlossenes Rohr ausgebildet ist, an dessen Wand das ebenfalls rohrförmige Heizelement anliegt, das sich im wesentlichen über die volle Länge des Filterkörpers erstreckt.

Für die Beheizung durch das Heizelement steht somit die verhältnismäßig große Mantelfläche des rohrförmigen Filterkörpers zur Verfügung, wobei für einen sehr guten Wärmeübergang zwischen dem Heizelement und dem Filterkörper gesorgt ist, weil das Heizelement direkt an der betreffenden Wand des Filterkörpers anliegt. Mit dem erfindungsgemäßen Rußfilter können daher verhältnismäßig hohe Strömungsraten des Abgases behandelt werden, wie diese beim Betrieb von Dieselmotoren üblicherweise vorkommen.

Die Unteransprüche 2 bis 4 kennzeichnen bevorzugte Ausführungsformen des Heizelements. Nach Patentanspruch 5 wird es bevorzugt, wenn mehrere der Baueinheiten, bestehend aus den Filterkörpern mit den zugehörigen Heizelementen, in einem vom Abgas durchströmten Gehäuse parallel zueinander angeordnet sind. Dadurch steht dem Abgas eine sehr große, direkt beheizte Filterfläche zur Verfügung.

Wenn die in Strömungsrichtung vordere Stirnseite des Filterkörpers verschlossen ist, so befindet sich das Heizelement an der Außenwand des Filterkörpers, wodurch die aus dem Filterkörper mit dem Heizelement bestehende Baueinheit besonders einfach hergestellt werden kann.

Die Erfindung wird im folgenden anhand von Ausführungsbeispielen näher erläutert, aus denen sich weitere wichtige Merkmale ergeben. Es zeigt:

Fig. 1 — schematisch in einem Längsschnitt eine Ausführungsform eines erfindungsgemäßen Rußfilters;

Fig. 2 — vergrößert die Einzelheit X von Fig. 1;

Fig. 3 — perspektivisch eine Ausführungsform des hierbei zur Anwendung kommenden Heizelements;

Fig. 4 — ebenfalls perspektivisch eine Ausführungsform eines anderen, hierbei zur Anwendung kommenden Heizelements;

Fig. 5 — eine Ansicht eines Streckmetalls als weitere Ausführungsform eines Heizelements;

Fig. 6 — eine Stirnansicht von Fig. 5;

Fig. 7 — eine Ansicht eines Lochblechs als abermals abgeänderte Ausführungsform des Heizelements;

Fig. 8 — eine Stirnansicht von Fig. 7.

In ein Auspuffrohr 1 eines Kraftfahrzeug-Dieselmotors ist ein Filterelement eingesetzt. Das Filterelement besteht aus einem Filterkörper 4, der aus vakuumgeformten, keramischen Fasern hergestellt worden ist, wie dies beispielsweise der europäischen Offenlegungsschrift 178 426 entnommen werden kann.

In den Filterkörper ist ein Heizelement eingesetzt, das über nach außen geführte Anschlüsse mit Spannung versorgt werden kann.

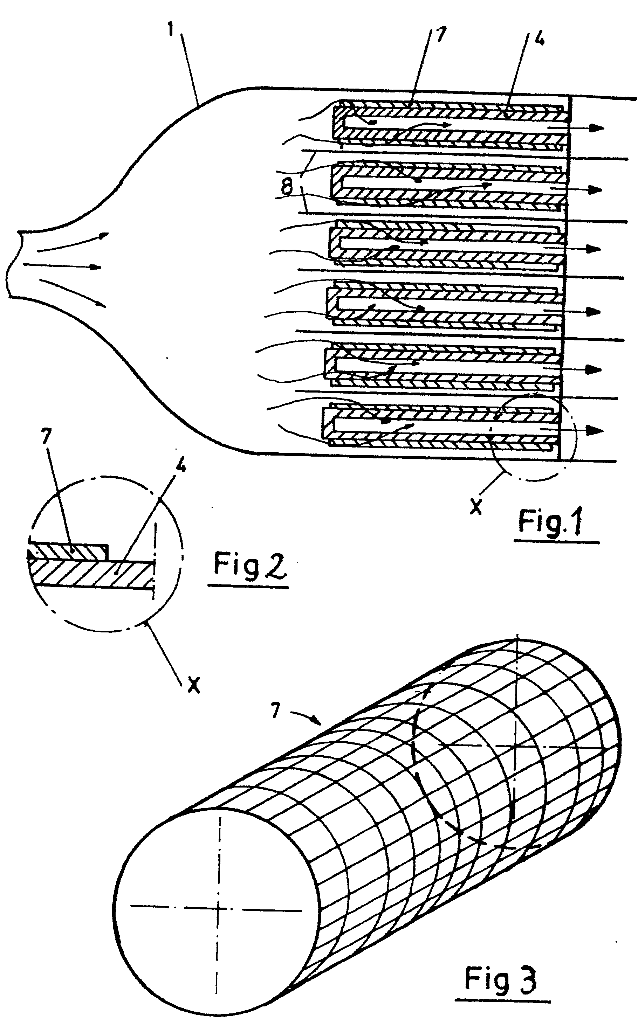

Fig. 1 zeigt, daß die Filterkörper 4 an ihren vorderen Stirnseiten verschlossen sind. Direkt an der Außenfläche der Filterkörper liegt ein elektrisches Heizelement 7 an.

Die Pfeile deuten die durch das Abgasrohr 1 und die elektrisch beheizten Filterkörper hindurchströmenden Abgase an.

Die Baueinheiten, bestehend aus den Filterkörpern mit zugehörigen Heizelementen, sind durch geeignete Bleche 8 strömungstechnisch jeweils voneinander getrennt. Die Filterkörper 4 mitsamt ihren Heizelementen 7 können rechteckig, quadratisch oder vorzugsweise zylindrisch geformt sein. Das gezeigte Rußfilter zeichnet sich also durch eine integrierte elektrische Beheizung aus.

Die Heizelemente 7 können an der Innenseite der Filterkörper und/oder an ihrer Außenseite angebracht sein.

Wichtig ist der direkte Wärmekontakt zwischen den Heizelementen und den Filterkörpern. Vergleiche auch hierzu Fig. 2.

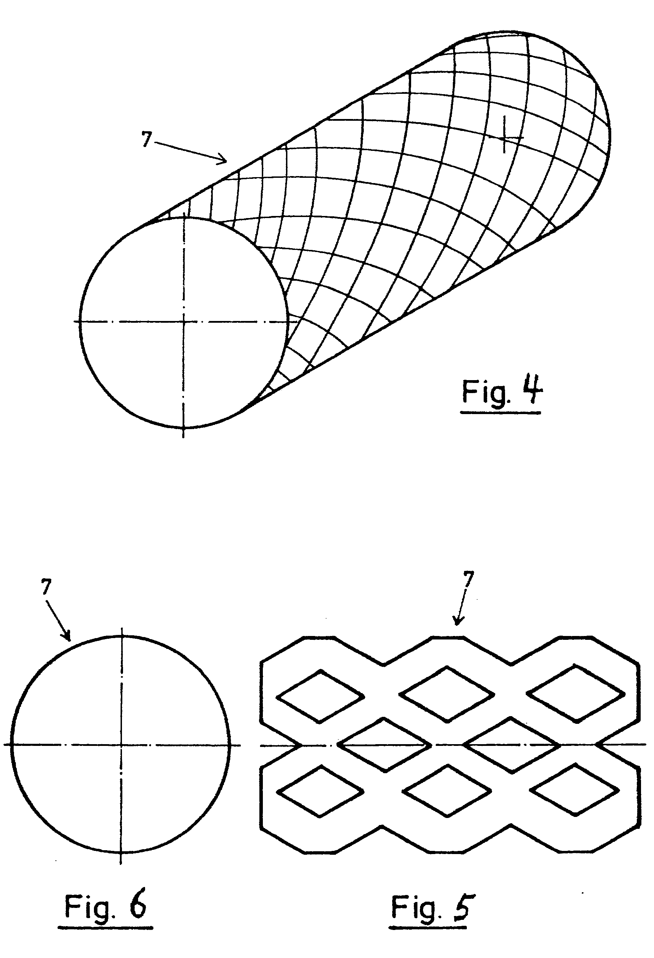

Die Fig. 3 bis 8 zeigen weitere bevorzugte Ausführungsformen der Heizelemente 7. Nach Fig. 3 können die Heizelemente durch sich rechtwinklig kreuzende Drähte gebildet werden und nach Fig. 4 schließen die sich kreuzenden Drähte spitze bzw. stumpfe Winkel miteinander ein.

Die Fig. 5 und 6 zeigen eine Ausführungsform des Heizelements aus einem Streckmetall. Nach Fig. 6 kann der aus dem Streckmetall gebildete Zylinder offen oder geschlossen sein.

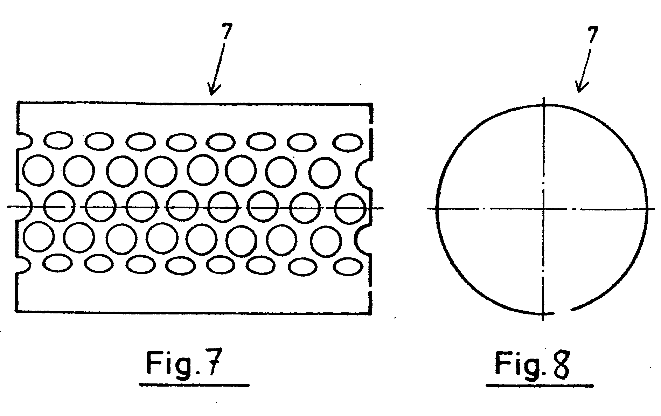

Dasselbe gilt für die Ausführungsform nach Fig. 7 und 8, wonach das Heizelement aus einem Lochblech besteht.

Wesentlich ist es somit, daß praktisch das gesamte Volumen des betreffenden Filterkörpers elektrisch derart erhitzt wird, daß die sich dort festsetzenden Rußpartikel verbrannt und mit dem Abgas als Feinstteilchen abgeführt werden können.

## Patentansprüche

Rußfilter für die Abgase eines Dieselmotors mit einem Filterkörper (4), vor dem sich in der Strömungsrichtung der Abgase ein elektrisches Heizelement (7) befindet, das in eingeschaltetem Zustand praktisch den gesamten von den Abgasen durchströmten Filterkörper (4) auf eine Temperatur erwärmt, bei der die Rußteilchen verbrennen, dadurch gekennzeichnet, daß der Filterkörper (4) als wenigstens ein an einer Stirnseite geschlossenes Rohr ausgebildet ist, an dessen Wand das ebenfalls rohrförmige Heizelement (7) anliegt, das sich im wesentlichen über die volle Länge des Filterkörpers (4) erstreckt.

2. Rußfilter nach Anspruch 1, dadurch gekennzeichnet, daß das Heizelement (7) durch sich kreuzende Drähte gebildet wird.

3. Rußfilter nach Anspruch 1, dadurch gekennzeichnet, daß das Heizelement (7) aus Streckmetall besteht.

4. Rußfilter nach Anspruch 1, dadurch gekennzeichnet, daß das Heizelement als Lochblech ausgebildet ist.

5. Rußfilter nach einem der Ansprüche 1–4, dadurch gekennzeichnet, daß mehrere der Baueinheiten, bestehend aus den Filterkörpern (4) mit den zugehörigen Heizelementen (7), in einem vom Abgas durchströmten Gehäuse (1) parallel zueinander angeordnet sind.

6. Rußfilter nach einem der Ansprüche 1–5, dadurch gekennzeichnet, daß die in Strömungsrichtung vordere Stirnseite des Filterkörpers (4) verschlossen ist.

## Claims

1. A soot filter for the exhaust gases of a diesel engine with a filter body (4) in front of which an electrical heating element (7) is provided in flow direction of the gases which in switched-on condition is heating practically the complete filter body (4) which is flown through by the gases to a temperature at which the soot particulates are burnt, characterized in that the filter body (4) is provided as at least one tube closed at a front side at the wall of which the also tube-like heating element (7) is engaging, which is extending substantially along the complete length of the filter body.

2. A soot filter according to claim 1, characterized in that the heating element (7) is provided by wires crossing each other.

3. A soot filter according to claim 1, characterized in that the heating element (7) is consisting of expanded metal.

4. A soot filter according to claim 1, characterized in that the heating element is provided as metal plate with holes.

5. A soot filter according to anyone of claims 1 to 4, characterized in that several of the units consisting of said filter bodies (4) with the associated heating elements (7) are provided parallely to each other in a housing (1) flown through by the gases.

6. A soot filter according to anyone of claims 1 to 5, characterized in that in flow direction the foremost front side of the filter body (4) is closed.

## Revendications

1. Filtre à suie pour les gaz d'échappement d'un moteur diesel comportant un corps de filtre (4) devant lequel, dans la direction du courant des gaz d'échappement, se trouve un élément chauffant électrique (7) qui, lorsqu'il est branché chauffe pratiquement tout le corps de filtre (4) traversé par les gaz d'échappement à une température à laquelle les particules de suie brûlent, caractérisé en ce que:

le corps de filtre (4) est constitué d'au moins un tube fermé à une face frontale, sur la paroi duquel reponse l'élément chauffant (7) également tubulaire, qui s'étend sensiblement sur toute la longueur du corps de filtre (4).

2. Filtre à suie selon la revendication 1, caractérisé en ce que, l'élément chauffant (7) est constitué de fils qui se croisent.

3. Filtre à suie selon la revendication 1, caractérisé en ce que l'élément chauffant (7) est en métal déployé.

4. Filtre à suie selon la revendication 1, caractérisé en ce que l'élément chauffant est en tôle perforée.

5. Filtre à suie selon l'une des revendications 1 à 4, caractérisé en ce que plusieurs des unités modulaires, constituées des corps de filtre (4) et des éléments chauffants (7) correspondants, sont disposées parallèlement l'une à l'autre dans un carter (1) parcouru par les gaz d'échappement.

6. Filtre à suie selon l'une des revendications 1 à 5, caractérisé en ce que la face frontale avant du corps de filtre, dans le sens de l'écoulement, est fermée.

Fig.1

Fig 2

Fig 3

Fig. 4

Fig. 6

Fig. 5

Fig.7

Fig.8